# EUROPEAN PATENT APPLICATION

(11) **EP 4 767 880 A1**
(43) Date of publication of application: **01.07.2026**
(21) Application number: 25780205.8
(22) Date of filing: 11.03.2025
(51) Int. Cl.: A47G 19/22, C03B 19/00, C03C 1/04, C03C 3/091, C03C 3/118

(54) **STEMWARE MANUFACTURING METHOD AND STEMWARE**

(30) Priority: 08.11.2024 JP 2024195888
(71) Applicant: ADAPTREND Inc., Iizuka-shi, Fukuoka 820-1114 (JP)
(72) Inventor: OKAZAKI, Akimasa, Iizuka-shi, Fukuoka 820-1114 (JP)
(74) Representative: Isarpatent
(86) International application number: PCT/JP2025/009159
(87) International publication number: WO 2026/100109

(57) **Abstract**

[Problem] Provided is a manufacturing method of stemware that can provide an optical effect, and can also be easily manufactured, as well as resists breakage despite being made of glass.

[Solution Means] A glass reservoir portion 11 is formed at a bottom portion of a bowl portion 1, white glass C is inserted into the glass reservoir portion 11, and then the glass reservoir portion 11 is stretched in the longitudinal direction of the white glass C to form a stem portion 2. Thereafter, a plate portion 3 is formed at an end portion of the stem portion 2 to manufacture stemware A.

## Description

### Technical Field

The present invention relates to a stemware manufacturing method and stemware. Specifically, the present invention relates to a stemware manufacturing method and stemware that can provide an optical effect, and can also be easily manufactured, as well as resists breakage despite being made of glass.

### Background Art

Stemware refers to a drinking glass provided with a handle at the bottom of the glass, and generally corresponds to a wine glass or a champagne glass. The stemware includes a bowl portion into which a beverage is poured, a stem portion serving as a handle, and a plate portion serving as a base.

Here, wine, champagne, etc., is an everyday drink and is also a drink that can be enjoyed at festive occasions such as a celebration or a party, and is thus often placed on a table that is colorfully decorated.

However, many pieces of stemware not only have a simple shape but also are formed of a single material such as transparent glass, and thus lack brilliance. Therefore, the appearance may not match the occasion such as a party.

Thus, in order to solve this problem and provide an optical effect for atmospheric enhancement, as disclosed in Patent Literature 1, a "light emitting glass" in which a light emitting member is assembled in a stem portion is disclosed. That is, in the light emitting glass, the light emitting member using a chemiluminescent agent as a light source is disposed in the stem portion.

### Citation List

### Patent Literature

Patent Literature 1: Japanese Unexamined Patent Application Publication No. H8-299144

### Summary of Invention

### Technical Problem

However, in the light emitting glass described in Patent Literature 1, it is necessary to make the stem portion hollow in order to insert the light emitting member, and it is difficult to manufacture the stem portion from a glass material.

In addition, it is difficult to secure strength in the hollow stem portion, and even if the hollow stem portion can be manufactured, the resulting product is extremely fragile.

Note that, by manufacturing the light emitting glass (light emitting glass having a hollow stem portion) described in Patent Literature 1 with a material (for example, a plastic material, etc.) other than glass, although ease of manufacturing and securing of strength are realized, a plastic material, etc., is inferior to a glass material in terms of glossiness and brilliance.

The present invention has been made in view of the above points, and an object of the present invention is to provide a stemware manufacturing method and stemware that can provide an optical effect, and can also be easily manufactured, as well as resists breakage despite being made of glass.

### Solution to Problem

To achieve the object described above, a stemware manufacturing method of the present invention includes a bowl portion forming step of forming a bowl portion having a predetermined shape and including a glass reservoir portion made of molten transparent glass at a bottom portion, an insertion step of inserting colored glass into the glass reservoir portion, a stem portion forming step of forming a stem portion by melting the colored glass inserted into the glass reservoir portion and then stretching the glass reservoir portion in a state of containing the colored glass, and a plate portion forming step of forming a plate portion having a predetermined shape by attaching the molten transparent glass to an end portion of the stem portion.

Here, by the bowl portion forming step of forming a bowl portion having a predetermined shape and including a glass reservoir portion made of molten transparent glass at a bottom portion, the glass reservoir portion can be formed at the bottom portion of the bowl portion as a base when colored glass is inserted in the insertion step described later.

In addition, by the insertion step of inserting colored glass into the glass reservoir portion, the colored glass can be disposed inside the transparent glass of the glass reservoir portion (the transparent glass of the glass reservoir portion can contain the colored glass).

Note that "contain" here is not limited to a case where "all" of the colored glass is disposed inside the glass reservoir portion, but also includes a case where "part" of the colored glass is disposed inside the glass reservoir portion (that is, the case where "another part" of the colored glass is disposed outside the glass reservoir portion).

In addition, by the stem portion forming step of forming a stem portion by melting the colored glass inserted into the glass reservoir portion and then stretching the glass reservoir portion in a state of containing the colored glass, "a stem portion including a central portion made of colored glass and a peripheral portion made of transparent glass and disposed around the central portion" can be formed at the bottom portion of the bowl portion.

Here, with "a stem portion including a central portion made of colored glass and a peripheral portion made of transparent glass and disposed around the central portion," when light is applied from above, the stem portion appears to be luminous (specifically, the colored glass itself appears to emit light).

In addition, with "a stem portion including a central portion made of colored glass and a peripheral portion made of transparent glass and disposed around the central portion," even when light is not applied, a special aesthetic appearance can be imparted to the stem portion, and brilliance can be provided.

On the other hand, in a case where the stem portion is formed of "only colored glass" (in a case where the stem portion does not have transparent glass) or in a case where the stem portion is formed of "only transparent glass" (in a case where the stem portion does not have colored glass), even if light is applied from above, the stem portion does not appear to be luminous.

In addition, in a case where the stem portion is formed of "only colored glass" (in a case where the stem portion does not have transparent glass) or in a case where the stem portion is formed of "only transparent glass" (in a case where the stem portion does not have colored glass), in a state where light is not applied, the stem portion has a simple configuration (only colored glass or only transparent glass), and thus brilliance cannot be provided.

Furthermore, the stem portion can be relatively easily formed by stretching the glass reservoir portion in a state of containing the colored glass (in other words, by stretching the glass reservoir portion in a solid state) (the stem portion can be easily formed at least as compared to the case of forming the hollow stem portion).

In addition, by stretching the glass reservoir portion at the bottom portion of the bowl portion to form the stem portion (in other words, by forming the stem portion integrally with the bowl portion), it is possible to obtain stemware which does not have a joining portion (joint) between the bowl portion and the stem portion, resulting in a visually pleasing appearance with structural integrity.

Note that, when the "bowl portion having a predetermined shape" and the "stem portion having a predetermined shape" are separately manufactured and then the "bowl portion having a predetermined shape" and the "stem portion having a predetermined shape" are joined, the joining portion (joint) becomes prominent and the joining portion also becomes large (thick), so that the structural integrity is impaired.

In addition, since the plate portion can be integrally formed with the stem portion by the plate portion forming step of forming a plate portion having a predetermined shape by attaching the molten transparent glass to an end portion of the stem portion, it is possible to obtain stemware which does not have a joining portion (joint) between the stem portion and the plate portion, resulting in a visually pleasing appearance with structural integrity.

Note that, when the "stem portion having a predetermined shape" and the "plate portion having a predetermined shape" are separately manufactured, and then the "stem portion having a predetermined shape" and the "plate portion having a predetermined shape" are joined, the joining portion (joint) becomes prominent and the joining portion also becomes large (thick), so that structural integrity is impaired.

In addition, in the insertion step, in a case where white glass that is colored glass containing sodium fluorosilicate is inserted in a proportion of 1.3 wt% to 3.5 wt% relative to the weight (total weight) of the transparent glass, "a stem portion including a central portion made of white glass and a peripheral portion made of transparent glass and disposed around the central portion" can be formed, and in a case where light is applied from above, the stem portion appears to be even more luminous.

Note that, when light is applied from above in a state where a beverage (for example, wine) is poured into the bowl portion, light reflecting the color of the beverage is incident on the stem portion. Then, in a case where the central portion is "white glass," the stem portion appears to emit light in the color of the beverage (specifically, the white glass itself appears to emit light in the color of the beverage).

Here, when the proportion of sodium fluorosilicate is less than 1.3 wt% relative to the weight (total weight) of the transparent glass, the white glass is too close to colorless and transparent (highly reduced degree of whiteness), and the transmittance of the white glass becomes too high, so that diffuse reflection of incident light in the white glass is less likely to occur, and the stem portion is less likely to appear to be luminous.

On the other hand, when the proportion of sodium fluorosilicate exceeds 3.5 wt% relative to the weight (total weight) of the transparent glass, the white glass becomes too close to white (highly increased degree of whiteness), and the transmittance of the white glass becomes too low, so that incident light is less likely to enter the white glass, and the stem portion is less likely to appear to be luminous.

In addition, in the insertion step, when white glass, which is colored glass containing sodium fluorosilicate, is inserted in a proportion of 2.0 wt% to 3.5 wt% relative to the weight (total weight) of the transparent glass, the white glass is easily formed linearly in the stem portion.

Here, in a case where the proportion of sodium fluorosilicate is less than 2.0 wt% relative to the weight (total weight) of the transparent glass, when the stem portion is formed by stretching the glass reservoir portion in a state of containing the colored glass (white glass), the white glass tends to be irregularly warped and distorted in shape.

Note that, as the proportion of sodium fluorosilicate increases, the less irregularly the white glass will be warped and distorted, allowing for a straight and a visually pleasing axial appearance finish, but as described above, in a case where the proportion of sodium fluorosilicate exceeds 3.5 wt% relative to the weight (total weight) of the transparent glass, the stem portion is less likely to appear to be luminous.

In addition, in a case where the insertion step inserts colored glass, which is a rod-shaped body, into the glass reservoir portion, and the stem portion forming step forms the stem portion by stretching the glass reservoir portion in the longitudinal direction of the colored glass, which is the rod-shaped body, the glass reservoir portion is easily stretched linearly, and the stem portion is relatively easily formed.

For example, the colored glass is disposed at the center portion of the glass reservoir portion (the center portion in the plane perpendicular to the longitudinal direction of the colored glass) so that the "longitudinal direction of the colored glass" coincides with the "tensile direction of the glass reservoir portion," and by focusing on forming the colored glass in a straight line, the glass reservoir portion can be easily linearly stretched.

In addition, in a case where the insertion step heats the colored glass that is a rod-shaped body to such an extent that a form of the colored glass is maintained, and then inserts the colored glass into the glass reservoir portion, the colored glass can be easily inserted into a desired position (for example, a center portion in a plane perpendicular to the longitudinal direction of the colored glass), and the glass reservoir portion can be stretched after insertion.

That is, since the colored glass is a rod-shaped body, the colored glass can be easily inserted into a desired position. In addition, the colored glass is heated (heated to such an extent that the form can be maintained) in advance, and heat transferred from the glass reservoir portion is also applied after the colored glass is inserted into the glass reservoir portion (molten transparent glass), so that the colored glass is sufficiently melted and the glass reservoir portion can be stretched after the colored glass is inserted.

In addition, in a case where the stem portion forming step forms the stem portion by heating the glass reservoir portion into which the colored glass is inserted, and then stretching the glass reservoir portion, even if the colored glass inserted into the glass reservoir portion is not sufficiently melted, the operation can be performed while the transparent glass and the colored glass are heated together and maintained at an appropriate temperature, so that the transparent glass and the colored glass can be easily stretched.

In addition, to achieve the object described above, a stemware according to the present invention includes a bowl portion made of transparent glass, a stem portion that supports the bowl portion and includes a central portion made of white glass and a peripheral portion made of transparent glass and disposed around the central portion, and a plate portion from which the stem portion projects and that is made of transparent glass, in which the stemware is manufactured by a manufacturing method including a bowl portion forming step of forming the bowl portion having a predetermined shape and including a glass reservoir portion made of molten transparent glass at a bottom portion, an insertion step of inserting the white glass into the glass reservoir portion, a stem portion forming step of forming the stem portion by melting the white glass inserted into the glass reservoir portion and then stretching the glass reservoir portion in a state of containing the white glass, and a plate portion forming step of forming the plate portion having a predetermined shape by attaching the molten transparent glass to an end portion of the stem portion.

Here, in the case where "stem portion including a central portion made of white glass containing sodium fluorosilicate in a proportion of 1.3 wt% to 3.5 wt% relative to a weight (total weight) of the transparent glass, and a peripheral portion made of transparent glass and disposed around the central portion" is configured, when light is applied from above, the stem portion appears to be even more luminous (specifically, the white glass itself appears to emit light).

In addition, when light is applied from above in a state where a beverage (for example, wine) is poured into the bowl portion, light reflecting the color of the beverage is incident on the stem portion. Then, since the central portion is "white glass," the stem portion appears to emit light in the color of the beverage (specifically, the white glass itself appears to emit light in the color of the beverage).

Furthermore, with "a stem portion including a central portion made of white glass and a peripheral portion made of transparent glass and disposed around the central portion," even when light is not applied, a special aesthetic appearance can be imparted to the stem portion, and brilliance can be provided.

Here, when the proportion of sodium fluorosilicate is less than 1.3 wt% relative to the weight (total weight) of the transparent glass, the white glass is too close to colorless and transparent (highly reduced degree of whiteness), and the transmittance of the white glass becomes too high, so that diffuse reflection of incident light in the white glass is less likely to occur, and the stem portion is less likely to appear to be luminous.

Therefore, the proportion of sodium fluorosilicate is preferably 1.3 wt% or more relative to the weight (total weight) of the transparent glass, but the proportion is not limited thereto.

On the other hand, when the proportion of sodium fluorosilicate exceeds 3.5 wt% relative to the weight (total weight) of the transparent glass, the white glass becomes too close to white (highly increased degree of whiteness), and the transmittance of the white glass becomes too low, so that incident light is less likely to enter the white glass, and the stem portion is less likely to appear to be luminous.

Therefore, the proportion of sodium fluorosilicate is preferably 3.5 wt% or less relative to the weight (total weight) of the transparent glass, but the proportion is not limited thereto.

### Advantageous Effects of Invention

A stemware manufacturing method according to the present invention can obtain stemware that can provide an optical effect, and can also be easily manufactured, as well as resists breakage despite being made of glass.

In addition, stemware according to the present invention can provide an optical effect, and can also be easily manufactured, as well as resists breakage despite being made of glass.

### Brief Description of Drawings

[FIG. 1] FIG. 1 is a schematic view for illustrating an example of stemware to which the present invention is applied.
[FIG. 2] FIG. 2 is a process diagram of an example of a stemware manufacturing method to which the present invention is applied.
[FIG. 3] FIG. 3 is a schematic view for illustrating a bowl portion forming step.
[FIG. 4] FIG. 4 is a schematic view for illustrating an insertion step.
[FIG. 5] FIG. 5 is a schematic view for illustrating a stem portion forming step.
[FIG. 6] FIG. 6 is a schematic view for illustrating a plate portion forming step.

### Description of Embodiments

Hereinafter, preferred embodiments for carrying out the invention (hereinafter, referred to as "embodiment") will be described. Note that the description will be given in the following order.
1. First Embodiment
2. Second Embodiment
3. Modifications

### <1. First Embodiment>

### [Description of Configuration]

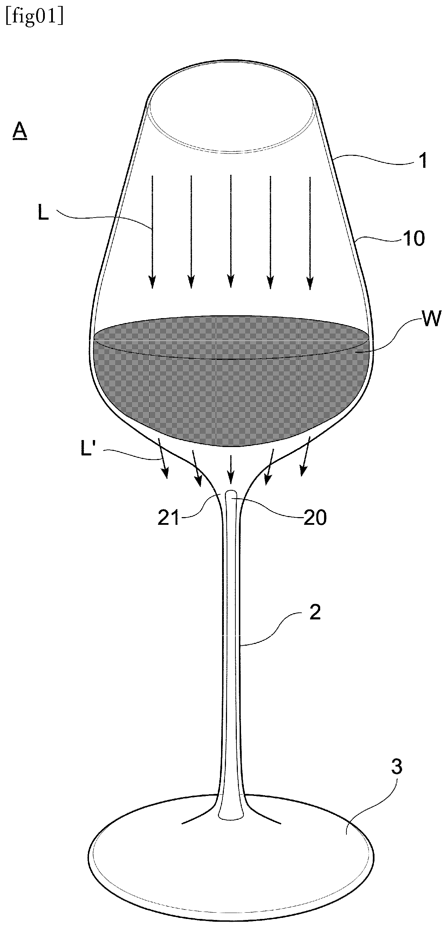

FIG. 1 is a schematic view for illustrating an example of stemware to which the present invention is applied. Stemware A illustrated here includes a bowl portion 1 into which a beverage is poured, a stem portion 2 continuously extending from a bottom portion 10 of the bowl portion 1 to support the bowl portion 1, and serving as a handle when the stemware A is used, and a disk-shaped plate portion 3 from which the stem portion 2 projects and that supports the bowl portion 1 and the stem portion 2.

The bowl portion 1 is made of transparent glass G, and has a height of about 110 mm, a diameter of about 80 mm at a lower protruding portion, and a mouth diameter of about 55 mm, and is formed in a shape gradually tapered upward.

The stem portion 2 includes a central portion 20 made of white glass C and a peripheral portion 21 made of transparent glass G over the substantially entire length thereof, is configured such that the peripheral portion 21 covers the outside of the central portion 20, and is formed in a substantially cylindrical shape having a length of about 100 mm and a diameter of about 4.5 mm (in that, the diameter of the central portion 20 is 1.5 mm to 2.5 mm).

The plate portion 3 is made of transparent glass G, and is formed in a disk shape having a height of about 10 mm and a diameter of about 80 mm.

Here, the transparent glass G constituting the bowl portion 1, the peripheral portion 21 of the stem portion 2, and the plate portion 3 contains the components shown in Table 1.

**[Table 1]**

| Component of transparent glass G | |
|---|---|
| Silica | 68.0 wt% |
| Sodium oxide | 11.0 wt% |
| Potassium oxide | 6.0 wt% |
| Boron oxide | 3.0 wt% |
| Calcium oxide | 5.5 wt% |
| Barium oxide | 3.0 wt% |
| Alumina | 3.5 wt% |

In addition, the white glass C constituting the central portion 20 of the stem portion 2 contains "sodium fluorosilicate" which is a white pigment, in addition to the components of the transparent glass G described above. Specifically, sodium fluorosilicate is contained in a proportion of 3.0 wt% relative to the weight (total weight) of the transparent glass G.

### [Effects]

In the stemware A to which the present invention described above is applied, when a translucent beverage W (for example, red wine) is poured into the bowl portion 1 and light L is applied from above, the color of the beverage W (red in the case of red wine) is reflected in light L' transmitted through the bowl portion 1. Then, the light L' (light reflecting the color of the beverage W) transmitted through the bowl portion 1 enters the central portion 20 of the stem portion 2, and the central portion 20 appears to exhibit the color of the beverage W, thereby allowing for an optical effect.

Specifically, the "light L' reflecting the color of the beverage W" incident on the central portion 20 is diffusely reflected in the central portion 20, and the central portion 20 exhibits the color of the beverage W. In addition, since the peripheral portion 21 serves as a lens, the color of the central portion 20 can be easily visually recognized, and as described above, the central portion 20 appears to exhibit the color of the beverage W.

Note that the "light L' reflecting the color of the beverage W" includes both (1) a case where the light is directly incident on the central portion 20 from the transparent glass G (when the light L' is parallel to the vertical axis), and (2) a case where the light is emitted from the transparent glass G into the air and is then incident on the central portion 20 (when the light L' has a predetermined angle with the vertical axis).

Here, in FIG. 1, only the light L from the vertically upper side is illustrated for convenience, but also in a case where the light L from an oblique direction (a direction having a predetermined angle with the vertical axis) passes through the bowl portion 1, and the light L' from the oblique direction is incident on the central portion 20, similarly, the central portion 20 appears to exhibit the color of the beverage W.

In addition, in the stemware A to which the present invention is applied, the stem portion 2 is solid, and it is easy to secure strength as compared with a hollow stem portion (for example, a stem portion of a light emitting glass described in Patent Literature 1). Therefore, a small diameter of about 4.5 mm can be realized, and in combination with the optical effect described above, a special aesthetic appearance can be imparted to the stem portion.

### [First Modification]

In the first embodiment described above, the case where the transparent glass G contains the components shown in Table 1 has been described as an example, but the present invention is not limited to such components.

### [Second Modification]

In addition, in the first embodiment described above, the white glass C containing sodium fluorosilicate in a proportion of "3.0 wt%" relative to the weight (total weight) of the transparent glass G is described as an example, but the weight is not necessarily limited to "3.0 wt%."

Here, the relationship between the "proportion of sodium fluorosilicate to the weight (total weight) of the transparent glass G" and the "transmittance" is shown in Table 2.

**[Table 2]**

| Sodium fluorosilicate contained in white glass | | | | | | | | | |
|---|---|---|---|---|---|---|---|---|---|
| Proportion of sodium fluorosilicate [wt%] | 1.0 or less | 1.2 | 1.3 | 1.5 | 2 | 2.5 | 3 | 3.5 | 4.0 or more |
| Transmittance | 93 | 91 | 89 | 85 | 53 | 33 | 24 | 10 | 0 |
| [%] | | | | | | | | | |
| Degree of color exhibition of central portion 20 | Poor | Poor | Good | Good | Good | Good | Good | Good | Poor |

As seen from Table 2, when the proportion of sodium fluorosilicate is "1.0 wt% or less" or "1.2 wt%" relative to the weight (total weight) of the transparent glass G, the transmittance of the central portion 20 exceeds 90%. Then, when the transmittance exceeds 90%, diffuse reflection of incident light in the central portion 20 hardly occurs, and the degree of color exhibition of the central portion 20 is poor.

In addition, as seen from Table 2, it can be found that when the proportion of sodium fluorosilicate is "4.0 wt% or more" relative to the weight (total weight) of the transparent glass G, the transmittance of the central portion 20 is 0%. Then, when the transmittance is 0%, the incident light cannot enter the central portion 20, and the degree of color exhibition of the central portion 20 is poor.

Therefore, the proportion of sodium fluorosilicate does not necessarily have to be "3.0 wt%" relative to the weight (total weight) of the transparent glass G, but is preferably "1.3 wt% to 3.5 wt%" in order to allow the central portion 20 to favorably exhibit color.

### <2. Second Embodiment>

Hereinafter, a method for manufacturing the stemware A described above will be explained. That is, an example of a stemware manufacturing method to which the present invention is applied will be described.

### [Description of Manufacturing Method]

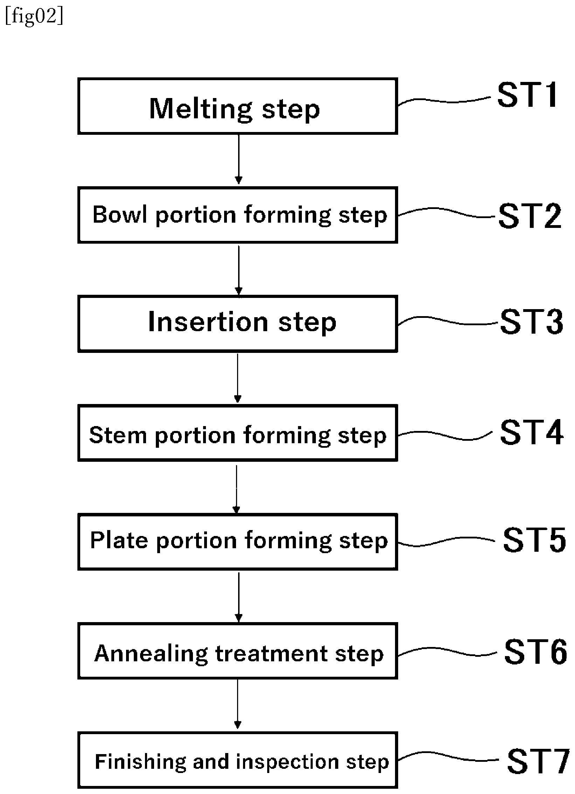

FIG. 2 is a process diagram of an example of a stemware manufacturing method to which the present invention is applied, and the stemware A is manufactured through the steps (1) to (7).
(1) Melting step
(2) Bowl portion forming step
(3) Insertion step
(4) Stem portion forming step
(5) Plate portion forming step
(6) Annealing treatment step
(7) Finishing and inspection step

Hereinafter, each of the steps (1) to (7) described above will be described in detail.

### (1) Melting step

In an example of a stemware manufacturing method to which the present invention is applied, first, sodium oxide, etc., is added to silica to obtain the component proportion of the transparent glass G shown in Table 1, and the mixture is heated to 1250°C in a glass melting furnace (not shown) to be melted (see reference sign ST1 in FIG. 2).

After the transparent glass G is melted, an appropriate amount of the melted transparent glass G is taken out from the glass melting furnace using a blowpipe (hollow rod-shaped body) B. Specifically, the transparent glass G is wound around one end of the blowpipe B, and an appropriate amount of gathered glass is taken out from the glass melting furnace.

### (2) Bowl portion forming step

The high-temperature glass (gathered glass) at 1250°C taken from the glass melting furnace is cooled to approximately 800°C for about 90 seconds, and by blowing through the other end of the blowpipe B (the end opposite to the end onto which the transparent glass G is wound), the wound transparent glass G is formed into a hollow spherical shape.

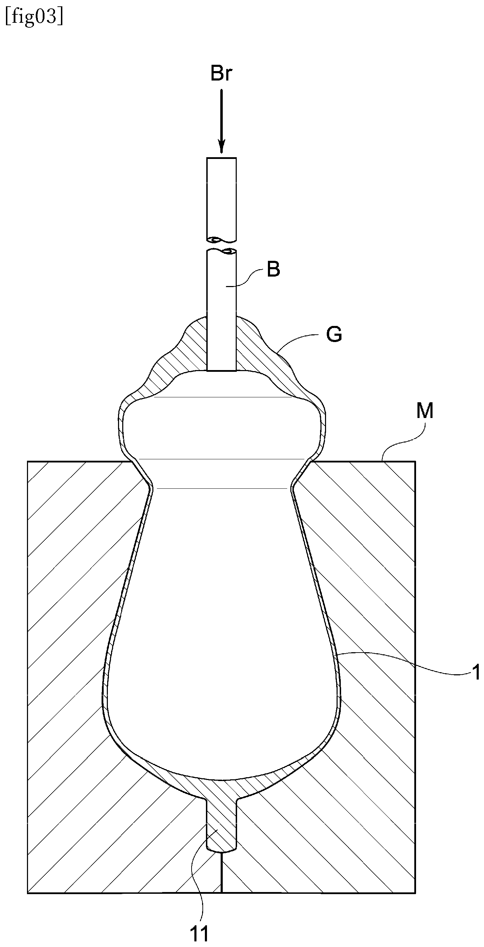

Next, as shown in FIG. 3, the hollow spherical-shaped transparent glass G is placed into a mold M, and by blowing through the other end of the blowpipe B (in FIG. 3, a reference sign Br indicates "blown air"), the sphere is expanded to form the bowl portion 1, while simultaneously forming a glass reservoir portion 11 at the bottom portion of the bowl portion 1 (see reference sign ST2 in FIG. 2).

### (3) Insertion step

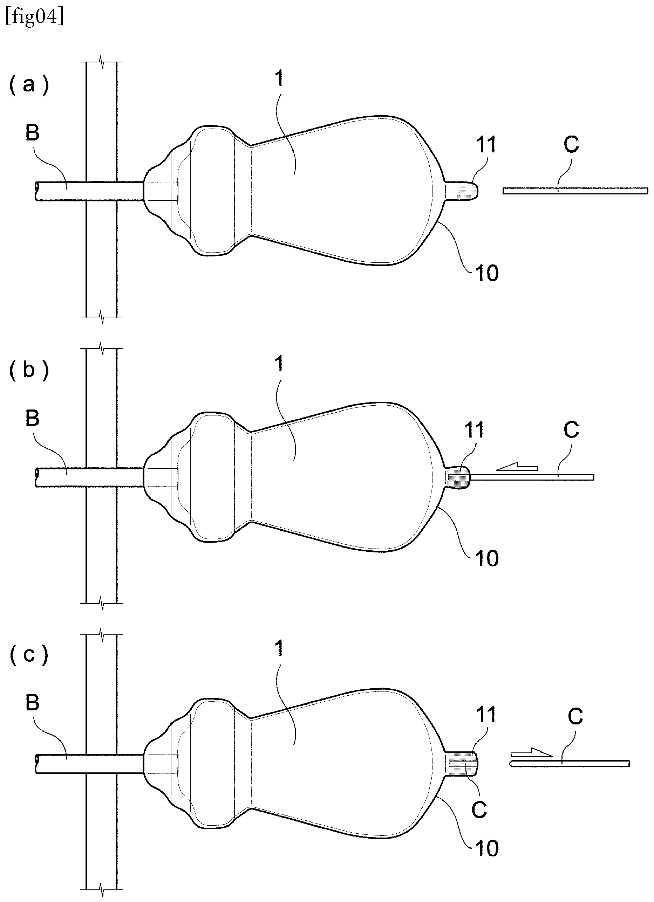

After the bowl portion 1 and the glass reservoir portion 11 are formed, the glass reservoir portion 11 is heated to a temperature of about 800°C using a gas burner, and as shown in FIGS. 4(a) and 4(b), 20 mm to 30 mm of the tip portion of rod-shaped white glass C is inserted near the center of the glass reservoir portion 11 along the longitudinal direction of the white glass C.

Next, a gas burner is used to heat the boundary between the "portion where the white glass C is inserted" and the "exposed portion (portion that is not inserted) of the white glass C" to melt the white glass C, thereby forming a state in which the white glass C having a length of about 20 mm to 30 mm is inserted into the glass reservoir portion 11 as illustrated in FIG. 4(c) (see reference sign ST3 in FIG. 2).

### (4) Stem portion forming step

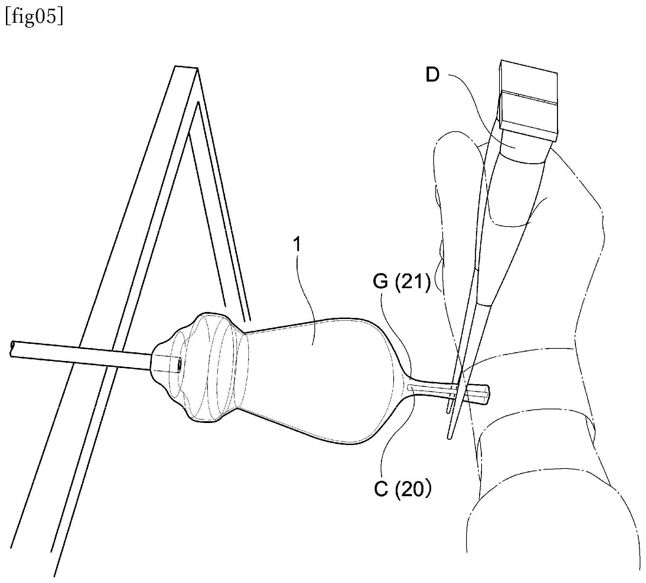

From a state in which the white glass C is inserted into the glass reservoir portion 11 (a state in which the periphery of the white glass C is covered with the transparent glass G), as illustrated in FIG. 5, the glass reservoir portion 11 is gradually stretched using a tool such as pincers D to form the stem portion 2 (see reference sign ST4 in FIG. 2).

Here, when the glass reservoir portion 11 is stretched, the white glass C inserted into the glass reservoir portion is also stretched, and the stem portion 2 including the central portion 20 made of the white glass C and the peripheral portion 21 made of the transparent glass G can be formed over substantially the entire length thereof.

Note that the straight stem portion 2 can be relatively easily formed by stretching the glass reservoir portion 11 while paying close attention so that the white glass C is stretched linearly.

### (5) Plate portion forming step

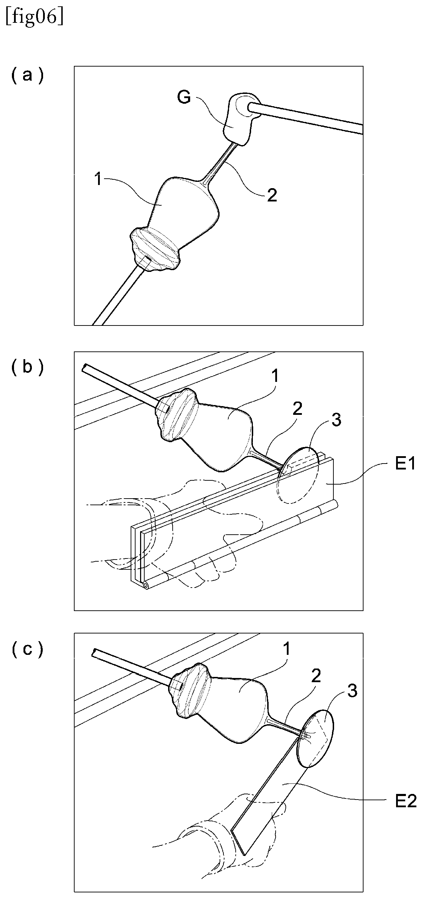

After the stem portion 2 is formed, as shown in FIG. 6(a), molten transparent glass G (gathered glass) is attached to an end portion of the stem portion 2 (an end portion on the side opposite to the bowl portion 1), and as shown in FIGS. 6(b) and 6(c), a disk-shaped plate portion 3 is formed by adjusting the shape using wooden trowels E1 and E2, etc., containing water (see reference sign ST5 in FIG. 2).

Note that, since the central portion 20 made of the white glass C extends to the end portion of the stem portion 2 (the end portion on the side opposite to the bowl portion 1), the position to which the gathered glass is attached can be easily identified.

### (6) Annealing treatment step

After the plate portion 3 is formed, the stemware A is placed in an annealing furnace at about 230°C, the temperature of the furnace is lowered to about 80°C to 90°C for about 3 hours, and then the stemware A is taken out (see reference sign ST6 in FIG. 2).
By such an annealing treatment, the internal stress of the stemware A can be removed, and the property of the glass can be improved.

### (7) Finishing and inspection step

In the finishing step, an extra portion of transparent glass G is cut off, the mouth portion of the bowl portion 1 is polished to be flat, and further, the mouth portion of the bowl portion 1 is heated to about 300°C to smooth the edge portion (see reference sign ST7 in FIG. 2).

In the inspection step, the presence or absence for overall scratches and distortions is confirmed (see reference sign ST7 in FIG. 2).

Note that, since the central portion 20 made of white glass C is formed in the stem portion 2, it is easy to perform inspection as to whether or not the straight stem portion 2 is formed.

### [Effects]

In the stemware manufacturing method described above to which the present invention is applied, the glass reservoir portion 11 formed in the bowl portion forming step ST2 is stretched in the stem portion forming step ST4 to form the stem portion 2, so that there is no joining portion (joint) between the bowl portion 1 and the stem portion 2, and the bowl portion 1 and the stem portion 2 can be integrally formed.

Then, by integrally forming the bowl portion 1 and the stem portion 2, the light L' (see FIG. 1) transmitted through the bowl portion 1 easily enters the stem portion 2, and the central portion 20 appears to exhibit the color of the beverage W.

### [Third Modification]

In the second embodiment described above, in the bowl portion forming step ST2, a method of placing the spherical transparent glass G into the mold M to form the bowl portion 1 (molding method by so-called "mold blowing") has been described as an example. However, it is sufficient as long as the bowl portion 1 and the glass reservoir portion 11 can be formed, and it is not always necessary to use the mold M.

For example, a method of forming the bowl portion 1 and the glass reservoir portion 11 may be employed, in which air is blown into the blowpipe B while rotating it in the air, without using the mold M (molding method by so-called "air blowing").

### [Fourth Modification]

In addition, in the second embodiment described above, the description has been given by exemplifying the method of inserting "only the tip portion" of the rod-shaped white glass C into the glass reservoir portion 11 in the insertion step, and then melting the white glass C with the tip portion (20 mm to 30 mm) remaining in the glass reservoir portion 11. However, as long as a state is achieved in which the white glass C of 20 mm to 30 mm is inserted, other methods may be employed.

For example, white glass C having a total length of about 20 mm to 30 mm may be inserted into the glass reservoir portion 11.

### [Fifth Modification]

Furthermore, as in the second modification described above, the proportion of sodium fluorosilicate is not necessarily limited to the proportion of "3.0 wt%" relative to the weight (total weight) of the transparent glass G.

Here, the relationship between the "proportion of sodium fluorosilicate to the weight (total weight) of the transparent glass G" and the "degree of distortion of the central portion 20" is shown in Table 3. Note that Table 3 also shows "transmittance" and "degree of color exhibition of central portion 20" (the same content as Table 2).

**[Table 3]**

| Sodium fluorosilicate contained in white glass | | | | | | | | | |
|---|---|---|---|---|---|---|---|---|---|
| Proportion of sodium fluorosilicate [wt%] | 1.0 or less | 1.2 | 1.3 | 1.5 | 2 | 2.5 | 3 | 3.5 | 4.0 or more |
| Transmittance [%] | 93 | 91 | 89 | 85 | 53 | 33 | 24 | 10 | 0 |
| Degree of color exhibition of central portion 20 | Poor | Poor | Good | Good | Good | Good | Good | Good | Poor |
| Degree of distortion of central portion 20 | Present | Present | Present | Present | Absent | Absent | Absent | Absent | Absent |

As seen from Table 3, when the proportion of sodium fluorosilicate relative to the weight (total weight) of the transparent glass G is "1.0 wt% or less," "1.2 wt%," "1.3 wt%," and "1.5 wt%," the central portion 20 (white glass C) is distorted in the stem portion forming step ST4.

Therefore, the proportion of sodium fluorosilicate does not necessarily have to be "3.0 wt%" relative to the weight (total weight) of the transparent glass G, but is preferably "2.0 wt% or more" in order to suppress distortion of the central portion 20 (white glass C) to form the central portion 20 neatly and straightly.

Then, as described in the second modification, in order to allow the central portion 20 to favorably exhibit color, it is preferably "1.3 wt% to 3.5 wt%".

Therefore, in order to form the central portion 20 (white glass C) neatly and straightly and to allow favorable color exhibiting, "2.0 wt% to 3.5 wt%" is preferable.

### <3. Modifications>

In the first embodiment and the second embodiment described above, the case where the central portion 20 is the white glass C has been described as an example, but the central portion 20 does not necessarily have to be white, and may be other than white.

However, in view of further facilitating visual recognition of the color of the beverage W in providing an effect such that the central portion 20 appears to exhibit a color due to diffuse reflection of the "light L' reflecting the color of the beverage W" incident on the stem portion 2 in the central portion 20, it is preferably white (that is, white glass C containing a white pigment in transparent glass G is preferable).

### Reference Signs List

- A: Stemware
- B: Blowpipe
- C: White glass
- G: Transparent glass
- 1: Bowl portion
- 10: Bottom portion
- 11: Glass reservoir portion
- 2: Stem portion
- 20: Central portion
- 21: Peripheral portion
- 3: Plate portion

## Claims

1. A stemware manufacturing method comprising:
a bowl portion forming step of forming a bowl portion having a predetermined shape and including a glass reservoir portion made of molten transparent glass at a bottom portion;
an insertion step of inserting colored glass into the glass reservoir portion;
a stem portion forming step of forming a stem portion by melting the colored glass inserted into the glass reservoir portion and then stretching the glass reservoir portion in a state of containing the colored glass; and
a plate portion forming step of forming a plate portion having a predetermined shape by attaching the molten transparent glass to an end portion of the stem portion.

2. The stemware manufacturing method according to claim 1, wherein
the insertion step inserts white glass that is the colored glass containing sodium fluorosilicate in a proportion of 1.3 wt% to 3.5 wt% relative to a weight of the transparent glass.

3. The stemware manufacturing method according to claim 2, wherein
the insertion step inserts white glass that is the colored glass containing sodium fluorosilicate in a proportion of 2.0 wt% to 3.5 wt% relative to a weight of the transparent glass.

4. The stemware manufacturing method according to claim 1, wherein
the insertion step inserts the colored glass that is a rod-shaped body into the glass reservoir portion, and
the stem portion forming step forms the stem portion by stretching the glass reservoir portion in a longitudinal direction of the colored glass that is the rod-shaped body.

5. The stemware manufacturing method according to claim 1, wherein
the insertion step heats the colored glass that is a rod-shaped body to such an extent that a form of the colored glass is maintained, and then inserts the colored glass into the glass reservoir portion.

6. The stemware manufacturing method according to claim 1, wherein the stem portion forming step forms the stem portion by heating the glass reservoir portion into which the colored glass is inserted, and then stretching the glass reservoir portion.

7. A stemware comprising:
a bowl portion made of transparent glass;
a stem portion that supports the bowl portion and includes a central portion made of white glass and a peripheral portion made of transparent glass and disposed around the central portion; and
a plate portion from which the stem portion projects and that is made of transparent glass, wherein
the stemware is manufactured by a manufacturing method including:
a bowl portion forming step of forming the bowl portion having a predetermined shape and including a glass reservoir portion made of molten transparent glass at a bottom portion;
an insertion step of inserting the white glass into the glass reservoir portion;
a stem portion forming step of forming the stem portion by melting the white glass inserted into the glass reservoir portion and then stretching the glass reservoir portion in a state of containing the white glass; and
a plate portion forming step of forming the plate portion having a predetermined shape by attaching the molten transparent glass to an end portion of the stem portion.
